# EUROPÄISCHE PATENTSCHRIFT

(11) **EP 2 400 178 B1**
(45) Veröffentlichungstag und Bekanntmachung des Hinweises auf die Patenterteilung: **06.03.2013**
(21) Anmeldenummer: 10167531.2
(22) Anmeldetag: 28.06.2010
(51) Int. Cl.: F16D 69/04

(54) **Trägerplatte und Bremsbelag für eine Scheibenbremse, sowie Verfahren zur Herstellung dieser**
Carrier board and brake lining for a disc brake and method for producing same
Plaque de support et garniture de frein pour un frein à disque et son procédé de fabrication

(43) Veröffentlichungstag der Anmeldung: 28.12.2011
(73) Patentinhaber: Lumag Sp. z o.o, 64-840 Budzyn (PL)
(72) Erfinder: Marek, Paszkiel, 64-610 Rogozno Wielkopolskie (PL)
(74) Vertreter: Eisenführ, Speiser & Partner

(56) Entgegenhaltungen:
- EP-A1- 0 731 288
- WO-A1-99/64762
- WO-A1-02/090792
- DE-C1- 19 938 711
- US-A- 5 141 083

## Beschreibung

Die vorliegende Erfindung betrifft eine Trägerplatte für einen Belag einer Scheibenbremse mit einem Grundkörper, der an einer belagsseitigen Oberfläche mit einem Bremsbelag verbindbar ist, und einem oder mehreren Halte-Abschnitten zur Aufnahme von Scherkräften während eines Bremsvorgangs.

Desweiteren betrifft die Erfindung einen Bremsbelag für eine Scheibenbremse, mit einem Belagsmaterial, das fest mit einer belagsseitigen Oberfläche einer Trägerplatte verbunden ist und vorzugsweise mit dieser verpresst ist.

Im Übrigen betrifft die Erfindung auch Verfahren zur Herstellung einer Trägerplatte für einen Scheibenbremsbelag sowie zur Herstellung eines Bremsbelags einer Scheibenbremse.

Trägerplatten und Bremsbeläge der vorgenannten Art kommen üblicherweise in Bremsanlagen der Fahrzeugindustrie zum Einsatz. Die Herstellung von Scheibenbremsbelägen vollzieht sich üblicherweise derart, dass Reibmaterial als Belagsmaterial auf eine Trägerplatte aufgepresst wird. Das Reibmaterial ist typischerweise ein Kompositmaterial mit metallischen, organischen und/oder keramischen Bestandteilen, während die Trägerplatte vorzugsweise aus Stahl gefertigt ist. Im Betrieb von Bremsanlagen sind insbesondere die Scheibenbremsbeläge hohen thermischen und mechanischen Belastungen ausgesetzt. Es wirken hierbei beträchtliche Scherkräfte auf die Verbindung zwischen Belagsmaterial und Trägerplatte. Um ein Abscheren und somit Trennen des Belagsmaterials von der Trägerplatte zu verhindern, müssen Vorkehrungen zur Aufnahme der auftretenden Scherkräfte getroffen werden. Im bekannten Stand der Technik finden sich verschiedene Lösungsansätze, die sich der Gestaltung der Trägerplatte widmen. Zu den bisherigen Lösungsansätzen zählen beispielsweise die Perforation der Trägerplatte durch Ausstanzen, das Aufschweißen von Gittern auf die Trägerplatte, sowie verschiedene Press- oder Gussverfahren, bei denen in die Trägerplatte Widerstandselemente in Form von Stiften oder Bolzen eingebracht werden. Die bekannten Verfahren und Erzeugnisse können aber insbesondere vor dem Hintergrund nicht vollständig zufriedenstellen, dass die Fertigung verschiedener Bremsbeläge mit abweichenden Trägerplattengeometrien vorweg jeweils die Herstellung individueller Werkzeuge erfordert, was sich in einem Mangel an Flexibilität und hohen vorbereitenden Kosten auswirkt. Zudem bereitet das Abscheren des Belagsmaterials von der Trägerplatte weiterhin Schwierigkeiten.

Eine solche Trägerplatte zeigt das Patent US 5,141,083. Die Vorrichtung für Scheibenbremssysteme weist eine Bremsplatte auf, die auf einer Verbindungsfläche zum Aufbringen des Bremsbelags mit Ausnehmungen und Vorsprüngen versehen ist.

Ausgehend hiervon lag der Erfindung die Aufgabe zu Grunde, eine Trägerplatte und einen Bremsbelag anzugeben, sowie Verfahren zur Herstellung dieser, bei denen die vorgefundenen Nachteile möglichst weitgehend abgemildert werden.

Die Erfindung löst die Aufgabe bei einer Trägerplatte der eingangs genannten Art, indem die Halte-Abschnitte mittels Schmelzbohren in den Grundkörper eingebracht sind und eine Ausnehmung sowie einen Vorsprung aufweisen. Die Erfindung macht sich hierbei die Erkenntnis zu Nutze, dass mittels des Verfahrens des Schmelzbohrens die Halte-Abschnitte äußerst flexibel in beliebiger Anzahl und Anordnung auf der Trägerplatte angeordnet werden können, ohne dass hierzu jeweils ein eigenes Werkzeug für eine vorkonfigurierte Anordnung von verschiedenen Halte-Abschnitten notwendig wäre. Die Ausnehmung und der Vorsprung eines Halte-Abschnitts können mittels des Schmelzbohr-Verfahrens in einem Arbeitsgang in den Grundkörper der Trägerplatte eingebracht werden, was dazu führt, dass die Trägerplatte Halte-Abschnitte aufweist, die besonders homogen ausgebildet sind. Dies wirkt sich vorteilhaft auf die Aufnahme von Scherkräften in im Wesentlichen paralleler Richtung zu der belagsseitigen Oberfläche des Grundkörpers aus. Unter Schmelzbohren wird in diesem Zusammenhang das lokale Aufschmelzen von Material in Folge von Reibung zwischen einem rotierenden Werkzeugkopf eines Werkzeugs und dem Grundkörper verstanden, wie es sich auch das später erläuterte erfindungsgemäße Verfahren zu Nutze macht.

In einer besonders bevorzugten Weiterbildung der erfindungsgemäßen Trägerplatte ist der Vorsprung aus Verdrängungsmaterial der Ausnehmung gebildet und auf der belagsseitigen Oberfläche erhaben angeordnet. Dadurch, dass das Verdrängungsmaterial, welches den Vorsprung bildet, demjenigen Material entspricht, welches mittels Schmelzbohren aufgeschmolzen und aus der Ausnehmung verdrängt ist, muss zum Anbringen von Vorsprüngen zusätzlich zur Ausnehmung kein weiteres Material verwendet werden, wie es beispielsweise im Stand der Technik beim Aufschweißen von Gittern der Fall wäre. Das Vorstehen des Vorsprungs auf der belagsseitigen Oberfläche ist auf diese Weise vorteilhaft in einem Arbeitsgang mit dem Erzeugen der Ausnehmung erreichbar. Die Identität des Verdrängungsmaterials des Vorsprungs mit dem Material des Grundkörpers wirkt sich zudem durch die Material-Homogenität positiv auf die mechanischen Eigenschaften der Trägerplatte aus.

In noch einer besonders bevorzugten Weiterbildung der Erfindung weist der Vorsprung einen nach außen gewölbten Rand auf. Dieser Rand, der sich von einer Achse der Ausnehmung aus senkrecht erstreckt, bildet eine Art Bord oberhalb der belagsseitigen Oberfläche des Grundkörpers. Der Rand ist dazu eingerichtet, dass sich Belagsmaterial, welches später mit der Trägerplatte bei deren bestimmungsgemäßer Weiterverwendung verbunden wird, zwischen die belagsseitige Oberfläche und den Rand setzt, diesen mithin hintergreift. Nach vollzogener Verbindung ist der Rand also dazu ausgebildet, zusätzlich zu den im Wesentlichen parallel zur belagsseitigen Oberfläche ausgerichteten Scherkräften auch im Wesentlichen senkrecht zu der belagsseitigen Oberflächen ausgerichtete Kräfte aufzunehmen. Das Ablösen des Belagsmaterials von der Trägerplatte wird hierdurch noch weiter erschwert, wodurch die Haltbarkeit von Bremsbelägen, die eine erfindungsgemäße Trägerplatte aufweisen, weiter erhöht wird.

Gemäß einer vorteilhaften Ausführungsform der erfindungsgemäßen Trägerplatte erstrecken sich die Ausnehmungen von der belagsseitigen Oberfläche aus in den Grundkörper hinein und weisen weiter vorzugsweise einen konischen Querschnitt auf. Durch die Erstreckung der Ausnehmung in den Grundkörper hinein können von der Ausnehmung selbst Scherkräfte aufgenommen werden. Die Ausführung der Ausnehmung mit einem konischen Querschnitt ist überdies im Hinblick auf den Spannungsverlauf in den Übergangsbereichen zwischen Ausnehmung und Oberfläche einerseits und im Grund der Ausnehmung andererseits vorteilhaft. Durch die Reduzierung von Spannungsspitzen wird die Haltbarkeit der Trägerplatte und insbesondere eines Verbundes aus der erfindungsgemäßen Trägerplatte mit dem Bremsbelag weiter erhöht. Schließlich wird hierdurch der Fertigungsablauf verbessert, indem eine vollständige Befüllung der Ausnehmung mit Belagmaterial erreicht, ein Hindurchtreten von Belagmaterial aber vermieden wird.

Die vorliegende Erfindung wird dadurch vorteilhaft weitergebildet, dass sich die Ausnehmungen teilweise oder vollständig durch den Grundkörper hindurch erstrecken. Weiterhin können die Ausnehmungen vorzugsweise einen teilweise oder vollständig zylindrischen Querschnitt aufweisen. Je nachdem, welche Anforderungen an den Bremsbelag und somit an die Trägerplatte hinsichtlich der Aufnahme von Scherkräften gestellt werden, können die Ausnehmungen unterschiedlich tief ausgeführt werden. Insbesondere können die Ausnehmungen auch innerhalb einer Trägerplatte an verschiedenen Stellen unterschiedlich ausgeführt sein, um die jeweils lokal vorherrschenden unterschiedlichen Kraftverhältnisse und Spannungsverhältnisse berücksichtigen zu können. Hierzu ist es erfindungsgemäß vorgesehen, dass die Ausnehmungen entweder den Grundkörper teilweise durchdringen, oder sich vollständig durch ihn hindurch erstrecken, wobei eine durchgehende Ausnehmung erzeugt wird. Je nachdem, ob die Ausnehmung sich vollständig durch den Grundkörper hindurch erstreckt oder nicht, und weiterhin abhängig davon, welche Geometrie der Werkzeugkopf des Werkzeugs aufweist, weisen die Öffnungen einen teilweise zylindrischen Bereich oder auch ein vollständig zylindrischen Bereich auf. Letzteres ist vor allem dann der Fall, wenn es sich bei dem Werkzeugkopf um einen zylindrisch geformten Senkkopf, oder einen beliebigen anderen Kopf handelt, der soweit durch den Grundkörper hindurchgeführt wurde, dass die Geometrie der Spitze des Werkzeugkopfes ebenfalls vollständig durch den Grundkörper hindurchgeführt ist, und folglich die Geometrie der Kopfspitze selbst nicht mehr durch die Kontur der Ausnehmung wiedergegeben ist. Anders verhält es sich, wenn der Werkzeugkopf nur teilweise in den Grundkörper eingedrungen ist. In einem solchen Fall wird in dem Bereich, in dem der Vorschub des Werkzeuges zum Erliegen gekommen ist, der Querschnittt der Ausnehmung eine mit der Spitze des Werkzeugkopfes korrespondierende negative Kontur aufweisen. Hieraus ergibt sich beispielsweise, dass für den Fall, dass ein Kegelsenker als Werkzeugkopf eingesetzt wird, die Ausnehmung in dem entsprechenden Abschnitt konisch ausgebildet ist. Beim Einsatz anders geformter Senkköpfe sind entsprechende korrespondierende Querschnitts-Konturen zu erwarten.

Die Erfindung löst die Aufgabe weiterhin bei einem Bremsbelag der eingangs genannten Art, indem die Trägerplatte nach einem der Ansprüche 1 bis 5 ausgebildet ist, und sich das Belagsmaterial innerhalb der Halte-Abschnitte und/oder zwischen dem Vorsprung und der belagsseitigen Oberfläche erstreckt. Durch das Ausbilden des Bremsbelags mit einer erfindungsgemäßen Trägerplatte ist die Widerstandsfähigkeit gegen Scherkräfte und auch gegen Kräfte in zu der belagsseitigen Oberfläche senkrechten Richtung deutlich erhöht. Zum einen werden die parallelen Scherkräfte von den erfindungsgemäß ausgestalteten Ausnehmungen und Vorsprüngen der Trägerplatte aufgenommen, und zum anderen erschweren die Vorsprünge durch ein Hintergreifen des Belagsmaterials hinter die Vorsprünge ein Abheben des Bremsmaterials von der Trägerplatte zusätzlich. Während sich dieser Vorteil schon ergibt, wenn bei einer konisch geformten Ausnehmung durch Verdrängung des Materials des Grundkörpers entsprechend konisch geformte Vorsprünge auf der belagsseitigen Oberfläche ausgebildet sind, so wird dieser Effekt noch zusätzlich verstärkt, wenn die Vorsprünge nach außen gewölbte Ränder aufweisen. Es kann auf diese Weise noch mehr Belagsmaterial in Hintergriff geraten.

Die Erfindung löst die zu Grunde liegende Aufgabe weiterhin bei einem Verfahren zur Herstellung einer Trägerplatte der eingangs genannten Art durch die Schritte: Einspannen eines Grundkörpers in eine Spannvorrichtung, die einem rotierenden Werkzeug zuordnenbar ist, Aufsetzen eines Werkzeugkopfes des rotierenden Werkzeugs auf einen Grundkörper der Trägerplatte, Rotation des Werkzeugkopfes relativ zu dem Grundkörper, wobei Material des Grundkörpers aufgeschmolzen wird, Vorschub des Werkzeugkopfes in Richtung des Grundkörpers, wobei ein Halte-Abschnitt erzeugt wird, der eine Ausnehmung und einen Vorsprung aufweist, wobei die Ausnehmung mittels Verdrängung aufgeschmolzenen Materials erzeugt wird, und wobei verdrängtes Material außerhalb der Ausnehmung zu einem Vorsprung erstarrt. Das Verfahren macht sich die Erkenntnis zu Nutze, dass unabhängig von einander an einer oder mehreren Stellen auf dem Grundkörper der Trägerplatte ein Halte-Abschnitt ausgebildet wird, indem jeweils nur lokal eine Aufschmelzung von Material betrieben wird. Dieses ausgeschmolzene Material wird sodann nach einer Verdrängung an die Außenseite des Grundkörpers auf die belagsseitige Oberfläche zur Erstarrung gebracht und bildet einen Vorsprung aus. Es werden folglich sowohl die Ausnehmung als auch der Vorsprung für jeden Halte-Abschnitt in einem einzigen Arbeitsgang erzeugt. Die Halte-Abschnitte werden an einer individuell gewünschten Stelle erzeugt, wobei dies immer mit dem gleichen Werkzeug geschehen kann, ohne dass eine erneute Konfiguration oder Verwendung eines separaten Werkzeuges für unterschiedliche Anordnungen der Halte-Abschnitte notwendig wäre.

Im Übrigen wird bezüglich der Vorteile des erfindungsgemäßen Verfahrens auf die obigen Äußerungen zur erfindungsgemäßen Trägerplatte und zum erfindungsgemäßen Bremsbelag verwiesen.

Das erfindungsgemäße Verfahren zur Herstellung einer Trägerplatte lässt sich vorteilhaft durch einen oder mehrere der folgenden Schritte weiterbilden: Wiederholung der Verfahrensschritte gemäß Anspruch 7 zur Herstellung weiterer Halte-Abschnitte, thermische Nachbehandlung des oder der Halte-Abschnitte zur Gefügebeeinflussung, insbesondere verlangsamtes oder beschleunigtes Abkühlen der Ausnehmung und/oder das Vorsprungs, mechanische Nachbehandlung des oder der Halte-Abschnitte zur Oberflächenbeeinflussung, insbesondere Aufrauhen oder Glätten der Oberfläche der Ausnehmung und/oder des Vorsprungs. Besondere Vorteile der thermischen Nachbehandlung sind darin zu sehen, dass in Abhängigkeit von der zur erwartenden Belastungssituation der Trägerplatte bzw. eines Bremssystems mit erfindungsgemäßer Trägerplatte die Struktur des erstarrenden Gefüges gezielt beeinflusst werden kann. So kann unter Beachtung werkstoffkundlicher Verfahrensvorgaben der Kohlenstoffgehalt im aufgeschmolzenen Gefüge beeinflusst werden, oder beispielsweise die Korngröße des erstarrenden Gefüges. Solche Einflussfaktoren wiederum haben unmittelbaren Einfluss auf die Härte und Duktilität des Materials im Bereich der Halte-Abschnitte. Die mechanische Nachbehandlung, insbesondere das Erhöhen oder Verringern der Oberflächenrauhheit beeinflusst die Adhäsionsfähigkeit des Belagsmaterials an den bearbeiteten Stellen. Eine erhöhte Adhäsion wirkt sich vorteilhaft auf die Anhaftung des Belagsmaterials an der Trägerplatte aus.

In einer vorteilhaften Ausführungsform des erfindungsgemäßen Verfahrens zur Herstellung einer Trägerplatte wird der Werkzeugkopf auf der belagsseitigen Oberfläche des Grundkörpers aufgesetzt, und die Ausnehmung wird von der belagsseitigen Oberfläche aus teilweise in den Grundkörper geformt, wobei aufgeschmolzenes Material entgegen der Vorschubrichtung aus der Ausnehmung auf die belagsseitige Oberfläche gelangt und dort erstarrt. Gemäß dieser Ausführungsform des Verfahrens wird umso mehr Material aus der Ausnehmung in Richtung des Vorsprungs verdrängt, desto tiefer der Werkzeugkopf in den Grundkörper eindringt. Das Verfahren gemäß dieser Ausführungsform bietet sich an, wenn das Verhältnis zwischen der Tiefe einer Ausnehmung relativ klein zu der Größe eines Vorsprungs sein soll.

Gemäß einer alternativen Ausführungsform des erfindungsgemäßen Verfahrens wird der Werkzeugkopf auf einer der belagsseitigen Oberfläche gegenüberliegenden Seite des Grundkörpers aufgesetzt, und die Ausnehmung wird zu der belagsseitigen Oberfläche hin vollständig durch den Grundkörper hindurch geformt, wobei aufgeschmolzenes Material in Vorschubrichtung aus der Ausnehmung auf die belagsseitige Oberfläche gelangt und dort erstarrt. Gerade in Fällen, in denen tiefe Ausnehmungen gewünscht sind, und insbesondere solche, die sich durch den gesamten Grundkörper hindurch erstrecken, ist es vorteilhaft, den Werkzeugkopf auf der der belagsseitigen Oberfläche entgegengesetzte Seite des Grundkörpers aufzusetzen. So wird die Ausnehmung von jener anderen Seite zur belagsseltigen Oberfläche hin durch den Grundkörper getrieben und es wird erst dann verdrängtes Material auf die belagsseitige Oberfläche gedrückt, wenn der Werkzeugkopf einen Durchstoß durch den Grundkörper auf der belagsseitigen Oberfläche erzeugt hat. Zuvor wird aufgeschmolzenes und verdrängtes Material entgegen der Vorschubrichtung aus dem Grundkörper entfernt, ohne auf die belagsseitige Oberfläche zu gelangen, wo es einen erfindungsgemäßen Vorsprung bilden könnte. Gemäß dieser Ausführungsform ist also das Verhältnis der Tiefe der Ausnehmung zu der Größe des Vorsprungs relativ größer.

Das erfindungsgemäße Verfahren zur Herstellung einer Trägerplatte wird dadurch vorteilhaft weitergebildet, dass der Vorschub und/oder die Rotationsgeschwindigkeit des Werkzeugkopfes gesteuert wird, wobei die Tiefe der Ausnehmung und/oder die Höhe sowie Breite des Vorsprungs und des Randes in Abhängigkeit der Steuerung veränderlich sind. Die Ausprägung des Halte-Abschnitts bestehend aus Ausnehmung und Vorsprung ist maßgeblich abhängig von den Parametern Vorschub und Rotationsgeschwindigkeit des Werkzeugkopfes. Ein weiterer Einflussfaktor ist die Geometrie des Werkzeugkopfes, welche durch Wechsel des Werkzeugkopfes unmittelbar änderbar ist. Die Parameter Vorschub und Rotationsgeschwindigkeit können jedoch zusätzlich in vorteilhafter Weise gesteuert werden, so dass die Form und Größe der Ausnehmung und insbesondere auch des Vorsprungs gezielt beeinflussbar sind. Je größer der Vorschub gewählt wird, desto tiefer wird die Ausnehmung in dem Grundkörper ausgebildet. Je stärker die Rotationsgeschwindigkeit ist, desto mehr Reibung besteht in Kontakt zwischen dem Grundkörper und dem Werkzeugkopf, wodurch eine stärkere Aufschmelzung des Grundkörper-Materials erfolgt. Weiterhin wird bei einer geeigneten Kombination aus Vorschub und Rotationsgeschwindigkeit das von dem Werkzeugkopf nach außen verdrängte Material in stärkerem Maße nach außen geschleudert, wodurch sich ein größerer Rand beim Erstarren ausbildet. Die Steuerung kann einerseits manuell, andererseits aber auch programmierbar und/oder rechnergestützt erfolgen.

Die Erfindung löst die ihr zu Grunde liegende Aufgabe bei einem Verfahren zur Herstellung eines Bremsbelags der eingangs genannten Art durch die Schritte: Herstellung einer Trägerplatte nach einem der Ansprüche 7 bis 10, Herstellung eines Belagsmaterials, Verbindung des Belagsmaterials mit der Trägerplatte in einem Press- oder Sintervorgang, wobei Belagsmaterial derart mit der Trägerplatte in Verbindung gebracht wird, dass es in die Vertiefung gelangt und darin erstarrt. Bezüglich der Vorteile des Eingreifens von Belagsmaterial in die erfindungsgemäße Trägerplatte mit ihren Ausnehmungen und Vorsprüngen (bzw. einem oder mehreren Vorsprüngen und Ausnehmungen) wird auf die vorstehenden Erläuterungen verwiesen.

Das erfindungsgemäße Verfahren zur Herstellung eines Bremsbelags wird vorteilhaft weitergebildet, indem Belagsmaterial derart mit der Trägerplatte in Verbindung gebracht wird, dass es den Rand des Vorsprungs hintergreift und dort erstarrt. Auch diesbezüglich wird auf das vorstehend Erläuterte verwiesen.

Im Folgenden wird die Erfindung anhand bevorzugter Ausführungsformen unter Bezugnahme auf die folgenden Figuren näher beschrieben. Hierbei zeigt:
- Fig. 1: eine perspektivische Ansicht einer erfindungsgemäßen Trägerplatte;
- Fig. 2: eine schematische Querschnittsansicht eines Halte-Abschnitts einer Trägerplatte gemäß der vorliegenden Erfindung;
- Fig. 3: eine Querschnittsansicht eines Halte-Abschnitts einer Trägerplatte gemäß einer alternativen Ausführungsform der vorliegenden Erfindung;
- Fig. 4: eine Querschnittsansicht eines Halte-Abschnitts einer Trägerplatte gemäß einer weiteren alternativen Ausführungsform der Erfindung;
- Fig. 5: eine Querschnittsdarstellung eines Halte-Abschnitts einer Trägerplatte gemäß einer weiteren alternativen Ausführungsform der Erfindung;
- Fig. 6: eine Querschnittsdarstellung eines Halte-Abschnitts einer Trägerplatte gemäß einer weiteren alternativen Ausführungsform der Erfindung;
- Fig. 7: eine perspektivische Ansicht eines aufgeschnittenen Bremsbelags gemäß der vorliegenden Erfindung;
- Fig. 8: eine Detailansicht eines Querschnitts durch einen erfindungsgemäßen Bremsbelag;
- Fig. 9: eine schematische perspektivische Ansicht einer Trägerplatte mit einem Werkzeug in verschiedenen Verfahrenszuständen; und
- Fig. 10: eine perspektivische Ansicht einer erfindungsgemäßen Trägerplatte nach Durchführung des erfindungsgemäßen Verfahrens.

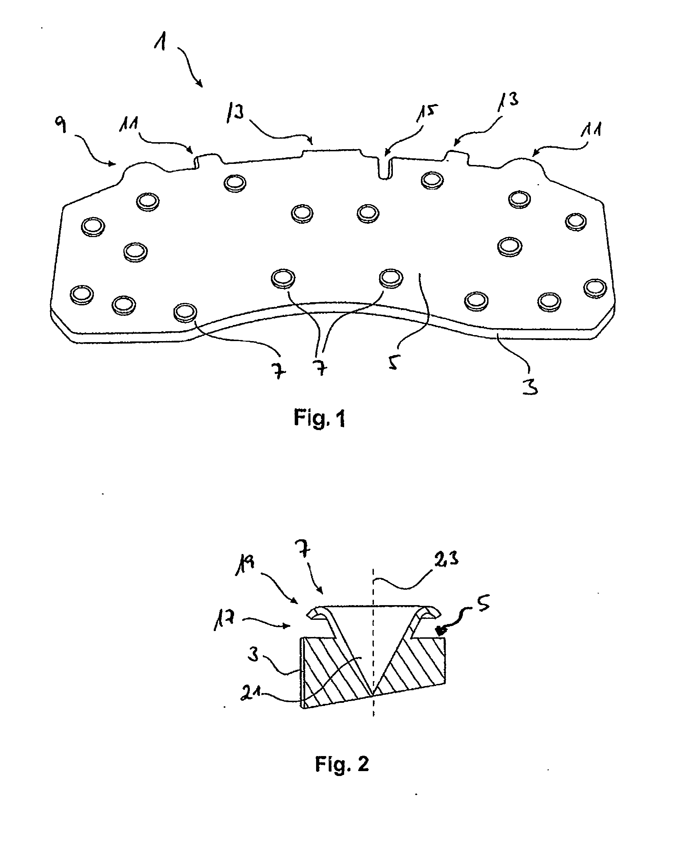

In Figur 1 ist eine Trägerplatte 1 für einen Scheibenbremsbelag gemäß der vorliegenden Erfindung dargestellt. Die Trägerplatte 1 besteht aus einem Grundkörper 3, dessen abgebildete Oberseite eine belagsseitige Oberfläche 5 darstellt, die dazu ausgebildet ist, mit einem Belagsmaterial durch Pressen verbunden zu werden. Die in Figur 1 gezeigte Trägerplatte 1 weist eine Vielzahl Halte-Abschnitte 7 auf, von denen beispielhaft drei Ausführungen mit Bezugszeichen versehen sind. Die Trägerplatte 1 weist an ihrem Grundkörper 3 verschiedene Nasen 9, 11, 13 sowie einen Schlitz 15 auf. Die Nasen 9, 11, 13 und der Schlitz 15 sind dazu ausgebildet, die Trägerplatte bzw. einen Bremsbelag mit der Trägerplatte 1 an einer bestimmten Position innerhalb einer (nicht dargestellten) Scheibenbrems-Anlage zu positionieren. Die Halte-Abschnitte 7 in der Trägerplatte 1 sind schematisch in den Figuren 2 bis 6 ausführlicher dargestellt.

Der Halte-Abschnitt 7 aus Figur 2 weist einen Vorsprung 17 auf, welcher einen nach außen gewölbten Rand 19 an seinem in der Figur oberen Ende aufweist. Der Bereich des Vorsprungs 17 geht homogen und fließend in eine Ausnehmung 21 über, die sich von der belagsseitigen Oberfläche 5 aus in den Grundkörper 3 hinein erstreckt. Die Erstreckungsrichtung verläuft hierbei entlang einer Achse 23. Das Querschnittsprofil der Ausnehmung 21 gemäß Figur 2 ist konisch ausgebildet, und ebenfalls zu der Achse 23 symmetrisch.

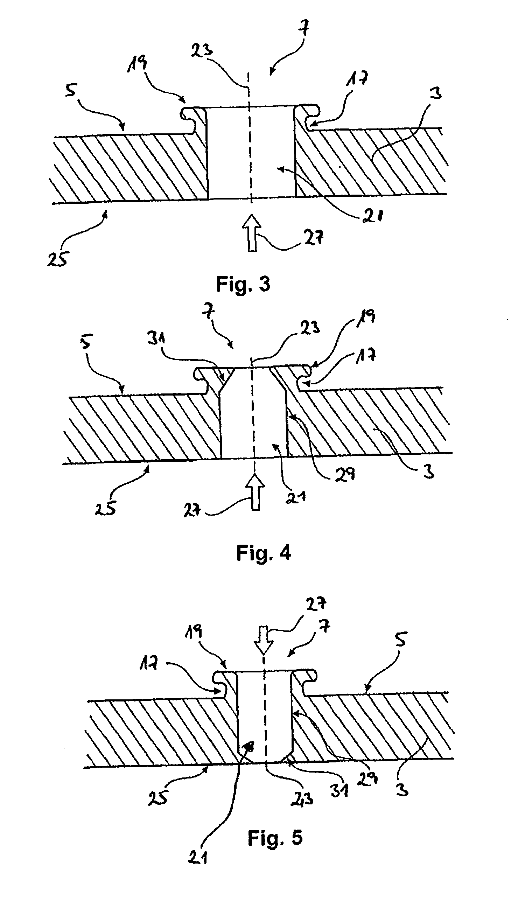

Im Gegensatz zu der Ausführungsform gemäß Figur 2 ist in Figur 3 ein Halte-Abschnitt 7 dargestellt, bei dem die Ausnehmung von einer der belagsseitigen Oberfläche 5 gegenüberliegenden Oberfläche 25 aus entlang der Achse 23 vollständig durch den Grundkörper 3 hindurch ausgebildet ist. Auch in dieser Ausführungsform ist auf der belagsseitigen Oberfläche 5 in Richtung eines Vorschubs 27 eines Werkzeugs ein Vorsprung 17 mit einem nach außen gewölbten Rand 19 ausgebildet. Der zu Achse 23 symmetrische Querschnitt der Ausnehmung 21 ist in dieser Ausführungsform vollständig zylindrisch ausgebildet.

Der in Figur 4 dargestellte Querschnitt durch einen Halte-Abschnitt 7 ist wie auch in Figur 3 von der Oberfläche 25 aus in Richtung der belagsseitigen Oberfläche 5 durch das Material des Grundkörpers 3 der Trägerplatte 1 hindurch ausgebildet. Der Vorschub 27 entlang der Achse 23 ist in Figur 4 allerdings gestoppt worden, bevor sich im Bereich der Ausnehmung 21 ein vollständig zylindrischer Querschnitt ausbilden konnte. Folglich weist die Ausnehmung 21 gemäß der Ausführungsform in Figur 4 einen zylindrischen Abschnitt 29 sowie einen konisch ausgebildeten Abschnitt 31 auf, der in seiner Querschnittsform dem Kopf eines Kegelsenkers entspricht. Überdies weist auch der Halte-Abschnitt 7 gemäß Figur 4 einen Vorsprung 17 mit einem nach außen gewölbten Rand 19 auf.

In Figur 5 ist eine Detailansicht einer weiteren Ausführungsform der erfindungsgemäßen Trägerplatte 1 abgebildet. In dieser Ausführungsform ist die Ausnehmung 21 von der belagsseitigen Oberfläche 5 aus zu der gegenüberliegenden Oberfläche 25 hin durch den Grundkörper 3 hindurch ausgebildet. Der Vorschub 27 erfolgt hierbei in Richtung der Achse 23, wobei entgegen der Vorschubrichtung auf der belagsseitigen Oberfläche 5 wiederum ein Vorsprung 17 mit einem nach außen gewölbten Rand 19 ausgebildet ist. Die Ausnehmung gemäß dieses Ausführungsbeispiels weist ebenso wie die Ausführungsform gemäß Figur 4 einen zylindrischen Abschnitt 29 und einen konischen Abschnitt 31 auf, wobei allerdings gemäß Figur 5 der konische Abschnitt 31 an der Oberfläche 25 ausgebildet ist.

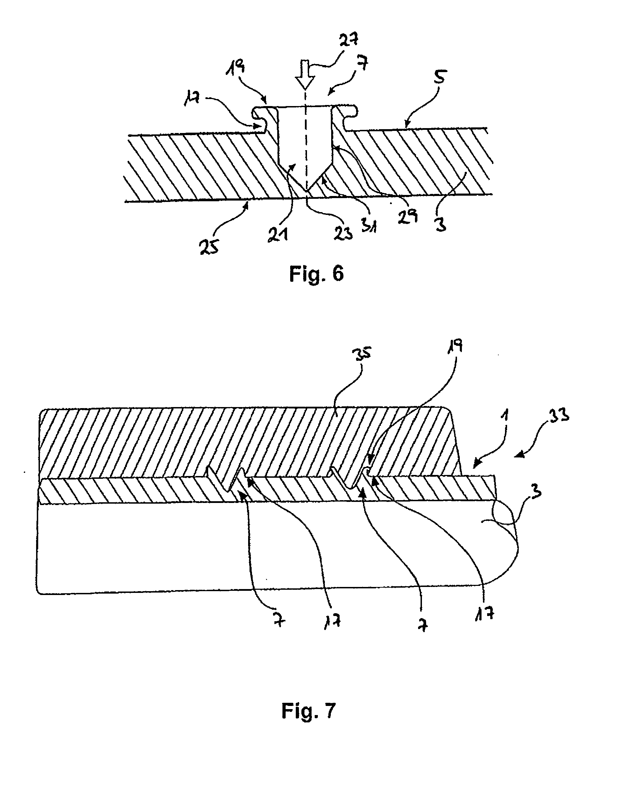

In Figur 6 ist noch eine weitere Ausführungsform der erfindungsgemäßen Trägerplatte in einer Detailansicht dargestellt, wobei sich die Ausnehmung 21 in dieser Ausführungsform von der belagsseitigen Oberfläche 5 aus in Richtung des Vorschubs 27 in den Grundkörper 3 hinein erstreckt. Der Vorschub entlang der Achse 23 ist allerdings gemäß der Ausführungsform aus Figur 6 nur teilweise durch die Trägerplatte hindurch erfolgt, so dass sich die Ausnehmung 21 nicht vollständig durch den Grundkörper 3 hindurch erstreckt. Allerdings weist auch die Ausnehmung 21 gemäß Figur 6 einen zylindrischen Abschnitt 29 und einen konisch ausgeprägten Abschnitt 31 auf.

Bezüglich der Figuren 2 bis 6 ist anzumerken, dass etwaige Rundungen und Unregelmäßigkeiten des Materials, welche sich zwangsläufig im Zuge der Verdrängung des Materials aus der Ausnehmung ergeben, nicht dargestellt sind. Es handelt sich bei den Figuren 2 bis 6 um idealisierte schematische Darstellungen.

In Figur 7 ist ein erfindungsgemäßer Bremsbelag 33 dargestellt. Figur 7 zeigt den Bremsbelag 33 in einer perspektivischen Darstellung von außen, wobei entlang einer Schnittebene ein Materialschnitt durchgeführt worden ist. In Figur 7 ist zu erkennen, dass in den Grundkörper 3 der Trägerplatte 1 zwei unterschiedlich ausgebildete Halte-Abschnitte 7 eingebracht sind. Der in Figur 7 linke Halte-Abschnitt 7 weist einen Vorsprung 17 auf, bei dem kein Rand ausgebildet ist. Dahingegen weist der in Figur 7 dargestellte rechte Halte-Abschnitt 7 einen Vorsprung 17 auf, an welchem ein nach außen gewölbter Rand 19 ausgebildet ist. Die Trägerplatte 1 gemäß Figur 7 ist mit Belagsmaterial 35 mittels eines Pressvorgangs verbunden, so dass die Trägerplatte 1 und das Belagsmaterial, 35 zusammen den Bremsbelag 33 bilden.

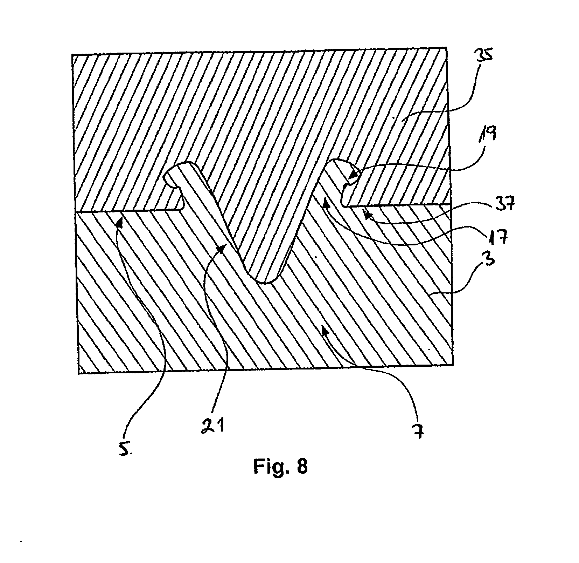

Das Zusammenwirken von Belagsmaterial 35 und Trägerplatte 1 ist in Figur 8 detaillierter dargestellt. Dort ist zu erkennen, wie die in den Grundkörper 3 eingebrachte Ausnehmung 21 von der belagsseitigen Oberfläche 5 aus mit Belagsmaterial 35 aufgefüllt ist. Belagsmaterial befindet sich allerdings nicht nur in der Ausnehmung 21 des Halte-Abschnitts 7, sondern desweiteren auch zwischen dem Rand 19 des Vorsprungs 17 und der belagsseitigen Oberfläche 5 in einem Hintergriffs-Bereich 37. Der Rand 19 des Vorsprungs 17 übernimmt so bei erstarrtem Belagsmaterial 35 die Funktion eines Widerhakens, der dem Abheben des Belagsmaterials von dem Grundkörper 3 entgegenwirkt. Die Ausnehmung 21 ist gemäß der in Figur 8 dargestellten Ausführungsform in erster Linie dazu ausgebildet, Scherkräfte in im Wesentlichen paralleler Richtung zu der belagsseitigen Oberfläche 5 aufzunehmen, und ein Abscheren zu verhindern.

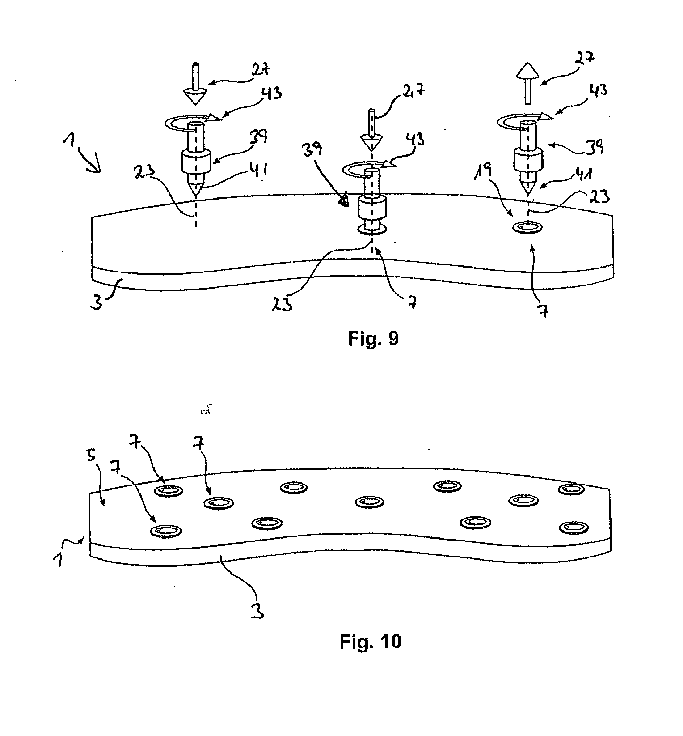

Die Darstellung aus Figur 9 veranschaulicht schematisch verschiedene Verfahrenszustände des erfindungsgemäßen Verfahrens zur Herstellung einer Trägerplatte für einen Scheibenbremsbelag. Im linken Abschnitt von Figur 9 ist ein Werkzeug 39 mit einem Werkzeugkopf 41 dargestellt, wobei der Werkzeugkopf 41 vorliegend als Kegelsenker ausgebildet ist. Ein gekrümmter Pfeil 43 veranschaulicht die Rotationsrichtung des Werkzeugs 39 um die Achse 23. Der Vorschub in Richtung des Pfeils 27 ist von oben auf den Grundkörper 3 der Trägerplatte 1 gerichtet. Die Trägerplatte 1 ist in (nicht dargestellter Weise) einer Spannvorrichtung fixiert, die entweder Teil des Werkzeugs 39 sein kann, oder Teil einer anderen Einrichtung ist, die dem Werkzeug zuordenbar ist. Beispielsweise könnte es sich hierbei um eine Werkzeugbank handeln.

Der linke Abschnitt aus Figur 9 zeigt die Anordnung des Werkzeugs relativ zu der Trägerplatte, bevor ein Halte-Abschnitt in die Trägerplatte 1 eingebracht wird. Der mittlere Abschnitt von Figur 9 hingegen zeigt einen Zustand, in dem das Werkzeug 39 mit seinem Werkzeugkopf 41 bereits auf eine Oberfläche des Grundkörpers 3 der Trägerplatte 1 aufgesetzt worden ist, und durch eine Kombination von Vorschub in Richtung des Pfeils 27 und einer Rotation in Richtung des Pfeils 43 um die Achse 23 herum ein Halte-Abschnitt 7 erzeugt wird. Dabei ist zu erkennen, dass Material entgegen der Vorschubrichtung des Pfeils 27 aus dem Grundkörper 3 der Trägerplatte 1 heraus verdrängt wird, und über der Oberfläche des Grundkörpers 3 erhaben ist.

Der rechte Abschnitt in Figur 9 zeigt das Werkzeug, nachdem es in Richtung des Pfeils 27 bereits wieder von dem Grundkörper 3 der Trägerplatte 1 entfernt worden ist, wobei die Rotation in Richtung des Pfeils 43 in gleicher Richtung verblieben ist. Das Werkzeug 39 befindet sich nicht mehr mit dem Werkzeugkopf 41 in Kontakt mit dem Halte-Abschnitt 7, der gemäß dem rechten Abschnitt von Figur 9 fertiggestellt ist. Der zu der Achse 23 symmetrische Querschnitt des Halte-Abschnitts 7 lässt einen nach außen gewölbten Rand 19 erkennen. Hinsichtlich weiterer Details des Halte-Abschnitts 7 wird auf die Figuren 2 bis 6 verwiesen.

In Figur 10 ist schließlich eine mit dem erfindungsgemäßen Verfahren zur Herstellung einer Trägerplatte erzeugte Trägerplatte 1 mit einem Grundkörper 3 dargestellt. Auf einer belagsseitigen Oberfläche 5 sind mehrere Halte-Abschnitt 7 an verschiedenen Positionen in den Grundkörper 3 eingebracht. Die verschiedenen Halte-Abschnitte sind durch jeweiliges Durchführen des erfindungsgemäßen Verfahrens an ihren jeweiligen Stellen durch Versetzen des Werkzeuges relativ zu dem eingespannten Grundkörper 3 der Trägerplatte 1 an ihren jeweiligen Positionen erzeugt worden.

## Patentansprüche

1. Trägerplatte (1) für einen Scheibenbremsbelag, mit
einem Grundkörper (3), der an einer belagsseitigen Oberfläche (5) mit Belagsmaterial (35) zu einem Bremsbelag (33) verbindbar ist, und
einem oder mehreren Halte-Abschnitten (7) zur Aufnahme von Scherkräften während eines Bremsvorgangs,
**dadurch gekennzeichnet, dass** die Halte-Abschnitte (7) mittels Schmelzbohren in den Grundkörper (3) eingebracht sind und eine Ausnehmung (21) sowie einen Vorsprung (17) aufweisen.

2. Trägerplatte (1) nach Anspruch 1,
**dadurch gekennzeichnet, dass** der Vorsprung (17) aus Verdrängungsmaterial der Ausnehmung (21) gebildet und auf der belagsseitigen Oberfläche (5) erhaben angeordnet ist.

3. Trägerplatte (1) nach Anspruch 1 oder 2,
**dadurch gekennzeichnet, dass** der Vorsprung (17) einen nach außen gewölbten Rand (19) aufweist.

4. Trägerplatte (1) nach einem der vorstehenden Ansprüche,
**dadurch gekennzeichnet, dass** die Ausnehmungen (21) als Sackloch ausgebildet sind und sich von der belagsseitigen Oberfläche (5) aus in den Grundkörper (3) hinein erstrecken und vorzugsweise einen konischen Querschnitt aufweisen.

5. Trägerplatte (1) nach einem der Ansprüche 1 bis 3,
**dadurch gekennzeichnet, dass** sich die Ausnehmungen (21) teilweise oder vollständig in/durch den Grundkörper (3) erstrecken und einen teilweise oder vollständig zylindrischen Querschnitt (29) aufweisen.

6. Bremsbelag für eine Scheibenbremse, mit
Belagsmaterial (35), das fest mit einer belagsseltigen Oberfläche (5) einer Trägerplatte (1) verbunden ist, vorzugsweise verpresst ist,
**dadurch gekennzeichnet, dass** die Trägerplatte (1) nach einem der Ansprüche 1 bis 5 ausgebildet ist, und sich das Belagsmaterial (35) innerhalb der Halte-Abschnitte (7), der Ausnehmung und/oder zwischen dem Vorsprung (17) und der belagsseitigen Oberfläche (5) erstreckt.

7. Verfahren zur Herstellung einer Trägerplatte (1) für einen Scheibenbremsbelag (33) mittels Schmelzbohren,
umfassend die Schritte:
- Einspannen eines Grundkörpers (3) in eine Spannvorrichtung, die in Bezug auf ein rotierendes Werkzeug (39) fixiert werden kann,
- Aufsetzen eines für ein Schnelzbohren ausgebildeten Werkzeugkopfes (41) des rotierenden Werkzeugs (39) auf einen Grundkörper (3) einer Trägerplatte (1),
- Rotation des Werkzeugkopfes (41) relativ zu dem Grundkörper (3), wobei Material des Grundkörpers (3) aufgeschmolzen wird,
- Vorschub (27) des Werkzeugkopfes (41) in Richtung des Grundkörpers (3), wobei ein Halte-Abschnitt (7) erzeugt wird, der eine Ausnehmung (21) und einen Vorsprung (17) aufweist, wobei die Ausnehmung (21) mittels Verdrängung aufgeschmolzenen Materials erzeugt wird, und
wobei verdrängtes Materials außerhalb der Ausnehmung (21) zu einem Vorsprung (17) erstarrt.

8. Verfahren nach Anspruch 7,
umfassend einen oder mehrere der Schritte:
- Wiederholung der Verfahrensschritte gemäß Anspruch 7 zur Herstellung weiterer Halte-Abschnitte (7),
- thermische Nachbehandlung des oder der Halte-Abschnitte (7) zur Gefügebeeinflussung, insbesondere verlangsamtes oder beschleunigtes Abkühlen der Ausnehmung (21) und/oder des Vorsprungs (17),
- mechanische Nachbehandlung des oder der Halte-Abschnitte (7) zur Oberflächenbeeinflussung, insbesondere Aufrauhen oder Glätten einer Oberfläche (5) der Ausnehmung (21) und/oder des Vorsprungs 17.

9. Verfahren nach Anspruch 7 oder 8,
**dadurch gekennzeichnet, dass** der Werkzeugkopf (41) auf der belagsseitigen Oberfläche (5) des Grundkörpers (3) aufgesetzt wird, und
die Ausnehmung (21) von der belagsseitigen Oberfläche (5) aus teilweise in dem Grundkörper (3) geformt wird, wobei
aufgeschmolzenes Material entgegen der Vorschubrichtung des Werkzeugkopfes aus der Ausnehmung (21) auf die belagsseitige Oberfläche (5) gelangt und dort erstarrt.

10. Verfahren nach Anspruch 7 oder 8,
**dadurch gekennzeichnet, dass** der Werkzeugkopf (41) auf einer der belagsseitigen Oberfläche (5) gegenüberliegenden Seite des Grundkörpers (3) aufgesetzt wird, und
die Ausnehmung (21) zu der belagsseitigen Oberfläche (5) hin vollständig durch den Grundkörper (3) hindurch geformt wird, wobei
aufgeschmolzenes Material in Vorschubrichtung aus der Ausnehmung (21) auf die belagsseitige Oberfläche (5) gelangt und dort erstarrt.

11. Verfahren nach einem der Ansprüche 7 bis 10,
**dadurch gekennzeichnet, dass** der Vorschub (27) und/oder die Rotationsgeschwindigkeit des Werkzeugkopfes (41) gesteuert wird, wobei die Tiefe der Ausnehmung (21) und/oder die Höhe sowie Breite des Vorsprungs (17) und des Randes (19) in Abhängigkeit der Steuerung veränderlich sind.

12. Verfahren zur Herstellung eines Bremsbelags einer Scheibenbremse,
umfassend die Schritte:
- Herstellung einer Trägerplatte (1) nach einem der Ansprüche 7 bis 10,
- Herstellung eines Belagsmaterials (35),
- Verbindung des Belagsmaterials (35) mit der Trägerplatte (1) in einem Press- oder Sintervorgang, wobei Belagsmaterial (35) derart mit der Trägerplatte (1) in Verbindung gebracht wird, dass es in die Vertiefung gelangt und darin erstarrt.

13. Verfahren nach Anspruch 12,
wobei Belagsmaterial (35) derart mit der Trägerplatte (1) in Verbindung gebracht wird, dass es den Rand (19) des Vorsprungs (17) hintergreift und dort erstarrt.

## Claims

1. Base plate (1) for a disc brake lining, having a main body (3) which can be joined to lining material (35) on a lining-side surface (5) to form a brake lining (33), and
one or more retaining portions (7) for absorbing shear forces during a braking operation,
**characterised in that** the retaining portions (7) are formed in the main body (3) by means of fusion drilling and have a recess (21) and a projection (17).

2. Base plate (1) as claimed in claim 1, **characterised in that** the projection (17) is produced by material forced out of the recess (21) and protrudes out from the lining-side surface (5).

3. Base plate (1) as claimed in claim 1 or 2, **characterised in that** the projection (17) has an outwardly cambered edge (19).

4. Base plate (1) as claimed in one of the preceding claims,
**characterised in that** the recesses (21) are provided in the form of blind bores and extend from the lining-side surface (5) into the main body (3) and preferably have a conical cross-section.

5. Base plate (1) as claimed in one of claims 1 to 3, **characterised in that** the recesses (21) extend partially or completely into/through the main body (3) and have a partially or completely cylindrical cross-section (29).

6. Brake lining for a disc brake, having lining material (35) which is fixedly joined to a lining-side surface (5) of a base plate (1), preferably pressed,
**characterised in that** the base plate (1) is as claimed in one of claims 1 to 5 and the lining material (35) extends inside the retaining portions (7), the recess and/or between the projection (17) and the lining-side surface (5).

7. Method of producing a base plate (1) for a disc brake lining (33) by means of fusion drilling,
comprising the steps of:
- clamping a main body (3) in a clamping device which can be fixed relative to a rotating tool (39),
- placing a tool head (41) of the rotating tool (39) designed for a fusion drilling process on a main body (3) of a base plate (1),
- rotating the tool head (41) relative to the main body (3), causing material of the main body (3) to melt,
- feeding (27) the tool head (41) forward in the direction of the main body (3), thereby creating a retaining portion (7) comprising a recess (21) and a projection (17), the recess (21) being created by forcing molten material out, and
material forced out of the recess (21) solidifies to form a projection (17).

8. Method as claimed in claim 7,
comprising one or more of the steps:
- repeating the method steps claimed in claim 7 to produce other retaining portions (7),
- subjecting the retaining portion or portions (7) to a thermal finishing treatment to influence the structure, in particular by slower or accelerated cooling of the recess (21) and/or the projection (17),
- subjecting the retaining portion or portions (7) to a mechanical finishing treatment to influence the surface, in particular by roughening or smoothing a surface (5) of the recess (21) and/or the projection (17).

9. Method as claimed in claim 7 or 8,
**characterised in that** the tool head (41) is placed on the lining-side surface (5) of the main body (3), and
the recess (21) is formed partially in the main body (3) from the lining-side surface (5), during which molten material is moved opposite the forward feed direction of the tool head out of the recess (21) onto the lining-side surface (5), where it solidifies.

10. Method as claimed in claim 7 or 8,
**characterised in that** the tool head (41) is placed on a side of the main body (3) opposing the lining-side surface (5) and the recess (21) is formed completely through the main body (3) to the lining-side surface (5), during which molten material is moved in the forward-feed direction out of the recess (21) onto the lining-side surface (5), where it solidifies.

11. Method as claimed in one of claims 7 to 10, **characterised in that** the forward-feeding movement (27) and/or speed of rotation of the tool head (41) is controlled, and the depth of the recess (21) and/or the height and width of the projection (17) and edge (19) are variable as a function of the controller.

12. Method of producing a brake lining of a disc brake, comprising the steps of:
- producing a base plate (1) as claimed in one of claims 7 to 10,
- producing a lining material (35),
- joining the lining material (35) to the base plate (1) in a pressing or sintering process, as a result of which the lining material (35) is joined to the base plate (1) in such a way that it moves into the recess, where it solidifies.

13. Method as claimed in claim 12,
whereby lining material (35) is joined to the base plate (1) in such a way that it extends around the edge (19) of the projection (17), where it solidifies.

## Revendications

1. Plaque support (1) pour une garniture de frein à disque, comprenant un corps de base (3) qui est susceptible d'être relié, sur une surface côté garniture (5), avec un matériau de garniture (35) pour former une garniture de frein (33), et
un ou plusieurs tronçons de maintien (7) pour encaisser des forces de cisaillement pendant un processus de freinage,
**caractérisée en ce que** les tronçons de maintien (7) sont ménagés dans le corps de base (3) au moyen d'une opération de perçage-fusion et comportent un évidement (21) ainsi qu'une saillie (17).

2. Plaque support (1) selon la revendication 1,
**caractérisée en ce que** la saillie (17) est formée par du matériau refoulé de l'évidement (21) et est agencée en surélévation sur la surface côté garniture (5).

3. Plaque support (1) selon la revendication 1 ou 2,
**caractérisée en ce que** la saillie (17) comporte une bordure (19) bombée vers l'extérieur.

4. Plaque support (1) selon l'une des revendications précédentes,
**caractérisée en ce que** les évidements (21) sont formés comme des trous borgnes et s'étendent depuis la surface côté garniture (5) en pénétrant dans le corps de base (3), et présentent de préférence une section conique.

5. Plaque support (1) selon l'une des revendications 1 à 3,
**caractérisée en ce que** les évidements (21) s'étendent partiellement ou complètement dans/à travers le corps de base (3) et présentent une section (29) partiellement ou totalement cylindrique.

6. Garniture de frein pour un frein à disque, comprenant un matériau de garniture (35) qui est relié fermement avec une surface côté garniture (5) d'une plaque support (1), de préférence par pressage, **caractérisée en ce que** la plaque support (1) est réalisée suivant l'une des revendications 1 à 5, et **en ce que** le matériau de garniture (35) s'étend à l'intérieur des tronçons de maintien (7), de l'évidement et/ou entre la saillie (17) et la surface côté garniture (5).

7. Procédé pour la production d'une plaque support (1) pour une garniture de frein à disque (33) au moyen d'une opération de perçage-fusion,
comprenant les étapes consistant à :
- enserrer un corps de base (3) dans un dispositif de serrage, lequel peut être fixé par référence à un outil en rotation (39),
- poser une tête d'outil (41), réalisée pour une opération de perçage-fusion, de l'outil (39) en rotation sur un corps de base (3) d'une plaque support (1),
- mettre en rotation la tête d'outil (41) par rapport au corps de base (3), de sorte que le matériau du corps de base (3) est amené en fusion,
- avancer (27) la tête d'outil (41) en direction du corps de base (3), de manière à engendrer un tronçon de maintien (7) qui comprend un évidement (21) et une saillie (17), l'évidement (21) étant engendré au moyen du refoulement du matériau amené en fusion, et
le matériau refoulé se solidifie à l'extérieur de l'évidement (21) pour donner une saillie (17).

8. Procédé selon la revendication 7,
comprenant une ou plusieurs des étapes consistant à :
- répéter les étapes de procédé selon la revendication 7 pour produire d'autres tronçons de maintien (7),
- effectuer un traitement thermique postérieur du ou des tronçons de maintien (7) afin d'influencer la texture, en particulier refroidissement ralenti ou accéléré de l'évidement (21) et/ou de la saillie (17),
- effectuer un traitement mécanique ultérieur du ou des tronçons de maintien (7) afin d'influencer la surface, en particulier réalisation d'une surface rugueuse ou lisse (5) de l'évidement (21) et/ou de la saillie (17).

9. Procédé selon la revendication 7 ou 8,
**caractérisé en ce que** la tête d'outil (41) est posée sur la surface côté garniture (5) du corps de base (3), et
l'évidement (21) est formé partiellement dans le corps de base (3) en partant de la surface côté garniture (5), et
le matériau mis en fusion parvient, en sens contraire à la direction d'avance de la tête d'outil, hors de l'évidement (21) pour venir sur la surface côté garniture (5) et se solidifie sur celle-ci.

10. Procédé selon la revendication 7 ou 8,
**caractérisé en ce que** la tête d'outil (41) est posée sur un côté du corps de base (3) opposé à la surface côté garniture (5), et
l'évidement (21) est formé en direction de la surface côté garniture (5) entièrement à travers le corps de base (3), et
le matériau mis en fusion parvient, dans la direction d'avance, hors de l'évidement (21) pour venir sur la surface côté garniture (5) et se solidifie sur celle-ci

11. Procédé selon l'une des revendications 7 à 10,
**caractérisé en ce que** l'avance (27) et/ou la vitesse de rotation de la tête d'outil (41) est commandée, de sorte que la profondeur de l'évidement (21) et/ou la hauteur et la largeur de la saillie (17) et de la bordure (19) sont variables en fonction de la commande.

12. Procédé pour produire une garniture de frein d'un frein à disque, comprenant les étapes consistant à :
- fabriquer une plaque support (1) selon l'une des revendications 7 à 10,
- fabriquer un matériau de garniture (35),
- relier le matériau de garniture (35) avec la plaque support (1) dans une opération de pressage ou de frittage, et le matériau de garniture (35) est amené en liaison avec la plaque support (1) de telle manière qu'il parvient dans le renfoncement et se solidifie dans celui-ci.

13. Procédé selon la revendication 12,
dans lequel le matériau de garniture (35) est amené en liaison avec la plaque support (1) de telle manière qu'il engage la bordure (19) de la saillie (17) par l'arrière, et se solidifie à cet endroit.
